# EUROPÄISCHE PATENTANMELDUNG

(11) **EP 1 024 381 A1**
(43) Veröffentlichungstag der Anmeldung: **02.08.2000**
(21) Anmeldenummer: 00100510.7
(22) Anmeldetag: 11.01.2000
(51) Int. Cl.: G02B 6/44

(54) **Lichtwellenleiterkabel für den Einsatz in Hochspannungsanlagen**

(30) Priorität: 29.01.1999 DE 19903596
(71) Anmelder: SIEMENS AKTIENGESELLSCHAFT, 80333 München (DE)
(72) Erfinder: Gao, Zhan, Dr., 96450 Coburg (DE); Greiner, Ulrich, 96465 Neustadt (DE); Kamps, Rainer, Dr., 96271 Grub am Forst (DE)

(57) **Zusammenfassung**

Bei der Erfindung handelt es sich um ein optisches Kabel (OK), bei dem auf dem Kabelmantel (KM) eine koronafeste Skinschicht (KS) aufgebracht ist.

## Beschreibung

Die Erfindung betrifft ein Lichtwellenleiterkabel aus mindestens einem Lichtwellenleiter, einem Lichtwellenleiter-Bündel oder einem Lichtwellenleiterbändchen mit einem Kabelmantel aus Kunststoff für den Einsatz an Leiterseilen einer Hochspannungsanlage.

Aus WO 96/38 892 ist ein Verfahren zur Installation eines Lichtwellenleiterkabels am einem Seil einer Hochspannungsfreileitung bekannt.Dort wird das Lichtwellenleiterkabel, zum Beispiel ein optisches Luftkabel, mit Hilfe mindestens eines Kabelbandes entlang eines Hochspannungsseils befestigt, wobei das Kabelband mit einer Wickelmaschine um das Hochspannungsseil und das Lichtwellenleiterkabel herumge-wickelt wird. Besonders geeignet ist hierfür ein sogenanntes ADL-Kabel (AD = All-Dielectric). Es besteht aus einer rohrförmigen Umhüllung, in der Lichtwellenleiter, Lichtwellenleiterbändchen oder Lichtwellenleiterbündel lose eingebracht sind. Darüber befindet sich ein Kabelmantel aus Kunststoff. Im Inneren der rohrförmigen Umhüllung kann auch eine gelförmige Substanz eingebracht sein, wobei die Beweglichkeit der Lichtwellenleiterelemente erhalten bleibt.

Aus EP 0 321 278 - A1 ist eine Kabelkombination, bestehend aus einem optischen Kabel und einem elektrischen Leiter,z.B. einem Hochspannungsseil bekannt. Das optische Kabel wird wendelförmig um den elektrischen Leiter aufgewickelt.Das optische Kabel besteht aus einer rohrförmigen Umhüllung, in der ein oder mehrere Lichtwellenleiter oder Lichtwellenleiterbändchen eingebracht sind, wobei sich diese bewegen können. Eine gelartige Füllmasse kann ebenfalls vorgesehen werden.Die Umhüllung ist mit einer zugfesten Ummantelung und gegebenenfalls mit einer weiteren Hülle aus wärmefestem Material umgeben.

Als Werkstoffe für Umhüllungen von optischen Kabeln werden meist Polyolefine wie Polyethylen mittlerer Dichte (MDPE), High-Density-Polyethylen (HDPE), oder Polypropylen (PP) verwendet,die gegebenenfalls mit Ruß UV-stabilisiert sind. Derartige Umhüllungen sind z.B. für eine Montage an bzw. auf Phasenseilen von Hochspannungsanlagen bis zu Spannungswerten von ca. 30 kV ausreichend.Bei höheren Spannungen setzen jedoch Koronaentladungen ein, die frühzeitig zur Zerstörung der Ummantelung bzw. Kabelmantels führen können.

Aufgabe der Erfindung ist, ein Lichtwellenleiterkabel zu schaffen, dessen Kabelmantel vor Zerstörung durch Koronaentladungen geschützt wird.Die gestellte Aufgabe wird mit einem Lichwellenleiter der eingangs erläuterten Art dadurch gelöst, daß eine koronafeste Skinschicht auf dem Kabelmantel aufgebracht ist. Ein optisches Kabel mit einem an sich bekannten Aufbau wird gemäß vorliegender Erfindung mit einer koronafesten Skinschicht ummantelt, sodaß die auftretenden Koronaentladungen den Kabelmantel nicht mehr zerstören können. Dadurch ist die Gefahr einer vorzeitigen Zerstörung des Kabelmantels aus den bisher üblichen Kunststoffmaterialien verhindert. Für eine derartige Skinschicht eignen sich besonders Hochtemperaturthermoplaste wie z.B. Fluorpolymere, Silikone, Polyimide, sowie Copolymere dieser Stoffverbindungen. Die nötige Schichtdicke für die Skinschicht beträgt 100 µm bis 2 mm. Diese Skinschicht wird flächendeckend auf dem Kabelmantel, am besten bereits durch Coextrusion bei der Herstellung des optischen Kabels aufgebracht. Die Erfindung wird nun anhand einer Figur erläutert.

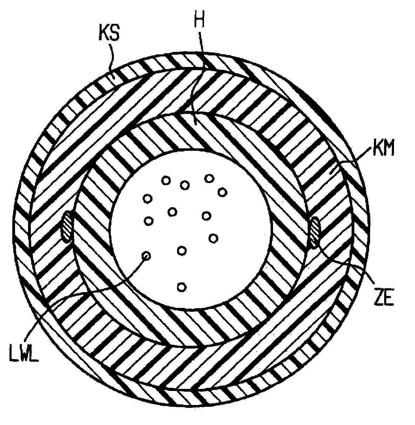

In der Figur ist der Aufbau eines optischen Kabels OK mit einer koronafesten Skinschicht KS gemäß der Erfindung im Querschnitt dargestellt.Dieses optische Kabel OK besteht aus den an sich bekannten Grundelementen, nämlich aus den Lichtwellenleitern, Lichtwellenleiterbündeln oder Lichtwellenleiterbändchen LWL, die lose innerhalb einer rohr- formigen Hülle H eingebracht sind.Bei Bedarf ist die rohrförmige Hülle H noch mit einem gelförmigen Füllmittel in der an sich bekannten Art gefüllt, wobei die Beweglichkeit der Lichtwellenleiterelemente erhalten bleibt.Um diese Hülle H ist dann ein Kabelmantel KM aus Kunststoff, z.B. aus einem Polyolefin wie z.B. Polyethylen niederer Dichte (LDPE), Polyethylen mittlerer Dichte (MDPE) oder lineares Polyethylen niederer Dichte (LLDPE) aufgebracht.Bei einem optischen Kabel, das z.B. an einem Leiterseil einer Hochspannungsanlage eingesetzt werden soll, sind meist noch zugfeste Elemente ZE im Kabelmantel KM längsverlaufend eingelagert.Gemäß der Erfindung wird nun über diesem Kabelmantel KM eine koronafeste Skinschicht KS aus den oben angegebenen Materialien angeordnet, die vorzugsweise durch Coextrusion zusammen mit dem Kabelmantel erstellt wird.

## Patentansprüche

1. Lichtwellenleiterkabel aus mindestens einem Lichtwellenleiter,einem Lichtwellenleiterbündel oder einem Lichtwellenleiterbändchen mit einem Kabelmantel aus Kunststoff für den Einsatz an Leiterseilen einer Hochspannungsanlage,
**dadurch gekennzeich-net**,
daß eine koronafeste Skinschicht (KS) auf dem Kabelmantel (KM) aufgebracht ist.

2. Lichtwellenleiterkabel nach Anspruch 1,
**dadurch gekennzeichnet**,
daß die Skinschicht (KS) aus einem Hochthermoplasten besteht.

3. Lichtwellenleiterkabel nach Anspruch 2,
**dadurch gekennzeichnet**,
daß der Hochtemperaturthermoplast ein Fluorpolymer ist.

4. Lichtwellenleiterkabel nach Anspruch 2,
**dadurch gekennzeichnet**,
daß der Hochtemperaturthermoplast ein Silikon ist.

5. Lichtwellenleiterkabel nach Anspruch 2,
**dadurch gekennzeichnet**,
daß der Hochtemperaturthermoplast ein Polyimid ist.

6. Lichtwellenleiterkabel nach einem der Ansprüche 3 bis 5,
**dadurch gekennzeichnet**,
daß der Hochtemperaturthermoplast ein Copolymer des angegebenen Stoffes ist.

7. Lichtwellenleiterkabel nach einem der vorhergehenden Ansprüche,
**dadurch gekennzeichnet**,
daß die Schichtdicke der Skinschicht (KS) 100 µm bis 2 mm beträgt.

8. Lichtwellenleiterkabel nach einem der vorhergehenden Ansprüche,
**dadurch gekennzeichnet**,
daß die Skinschicht (KS) durch Coextrusion mit dem Kabelmantel (KM) aufgebracht ist.

9. Lichtwellenleiterkabel nach einem der vorhergehenden Ansprüche,
**dadurch gekennzeichnet**,
daß der Kabelmantel (KM) aus einem Polyolefin besteht wie Polyethylen mittlerer Dichte (MDPE), High-Density-Polyethylen (HDPE), Polyethylen niederer Dichte (LDPE), lineares Polyethylen niederer Dichte (LLDPE) oder Polypropylen (PP).

10. Lichtwellenleiterkabel nach Anspruch 9,
**dadurch gekennzeichnet**,
daß das Polyolefin mit Ruß UV-stabilisiert ist.

11. Lichtwellenleiterkabel nach einem der vorhergehenden Ansprüche,
**dadurch gekennzeichnet**,
daß mindestens ein Zugentlastungselement (ZE) längs des Kabelmantels (KM) eingelagert ist.
